# FASCICULE DE BREVET EUROPEEN

(11) **EP 3 118 989 B1**
(45) Date de publication et mention de la délivrance du brevet: **17.10.2018**
(21) Numéro de dépôt: 16177604.2
(22) Date de dépôt: 01.07.2016
(51) Int. Cl.: H02P 9/02, H02J 1/00, B60L 11/02

(54) **MACHINE ELECTRIQUE TOURNANTE DOUBLE TENSION POLYPHASEE REVERSIBLE DE VEHICULE AUTOMOBILE, ET RESEAU ELECTRIQUE A DOUBLE SOUS-RESEAUX CORRESPONDANT**
ELEKTRISCH UMLAUFENDE MASCHINE MIT MEHRPHASIGER REVERSIBLER DOPPELSPANNUNG EINES KRAFTFAHRZEUGS, UND ENTSPRECHENDES ELEKTRISCHES NETZ MIT ZWEI UNTERNETZEN
ROTARY ELECTRIC MACHINE WITH REVERSIBLE MULTIPHASE DUAL VOLTAGE FOR A MOTOR VEHICLE, AND CORRESPONDING ELECTRICAL NETWORK WITH TWO SUB-NETWORKS

(30) Priorité: 17.07.2015 FR 1556786
(43) Date de publication de la demande: 18.01.2017
(73) Titulaire: VALEO EQUIPEMENTS ELECTRIQUES MOTEUR, 94046 Créteil Cedex (FR)
(72) Inventeur: LOUISE, Christophe, 94140 Alfortville (FR); KOBYLANSKI, Luc, 75014 Paris (FR); AZIZI SAMIR, Abdelaziz, 94320 Thiais (FR); SEIDENBINDER, Régis, 94600 Choisy le Roi (FR)
(74) Mandataire: Duprez, Richard

(56) Documents cités:
- US-A1- 2008 048 605
- US-A1- 2013 264 981
- US-A1- 2014 375 232

## Description

### DOMAINE TECHNIQUE DE L'INVENTION.

L'invention concerne une machine électrique tournante double tension polyphasée réversible de véhicule automobile, ainsi que son utilisation dans un réseau électrique d'alimentation des équipements d'un véhicule automobile à double sous-réseaux.

### ARRIERE PLAN TECHNOLOGIQUE DE L'INVENTION.

Les véhicules automobiles à moteur thermique comportent classiquement un réseau électrique de bord comprenant une batterie, généralement de 12 V, destiné à alimenter en énergie électrique les divers équipements, notamment un démarreur, indispensable pour assurer le démarrage du moteur thermique. Après le démarrage, un alternateur accouplé au moteur thermique assure la charge de la batterie.

De nos jours, le développement de l'électronique de puissance permet d'alimenter et de piloter une seule machine électrique tournante polyphasée réversible qui remplace avantageusement le démarreur et l'alternateur.

Dans un premier temps, cette machine, connue sous le nom d'alterno-démarreur, avait essentiellement pour but de remplir les fonctions autrefois dédiées à l'alternateur et au démarreur, et, accessoirement, de récupérer l'énergie au freinage, ou d'apporter un supplément de puissance et de couple au moteur thermique.

Dans le but d'accroître la puissance et d'améliorer le rendement de l'alterno-démarreur en augmentant sa tension de fonctionnement tout en conservant la possibilité d'utiliser des autres équipements standards, prévus pour une alimentation de 12 V à 14 V, notamment les batteries au plomb, a été développée une architecture bi-tension.

Cette architecture consiste en un réseau électrique de puissance reliant l'alterno-démarreur à un élément de stockage d'énergie électrique fonctionnant à une tension supérieure à 14 V, pouvant atteindre 48 V, et en un réseau électrique de service à 12 V reliant tous les autres équipements. L'adaptation des niveaux de tensions entre les deux réseaux est assurée par un convertisseur continu- continu réversible, généralement d'une puissance comprise entre 1,5 kW et 3 kW.

Dans ce contexte, la structure du convertisseur continu- continu réversible est choisie pour maximiser le rendement (95% par exemple) à un coût raisonnable, mais ce convertisseur doit être intégré dans le véhicule (boîtier d'environ 25 cm par 20 cm sur 8 cm), doit aussi être refroidi, et représente un coût additionnel en soi.

Par conséquent pour simplifier la structure du véhicule, il est connu d'utiliser dans une architecture de réseaux bi-tension une machine électrique tournante double tension spécifique capable de réaliser la conversion continu- continu pour alimenter les charges 12 V.

Cette machine électrique est généralement une machine double-triphasée dans laquelle sont intégrés un premier onduleur réversible connecté à un premier réseau à haute tension (48 V) et un second onduleur réversible connecté à un second réseau à basse tension (12 V).

Une machine de ce type est décrite notamment dans la demande de brevet américain US20140375232.

Quand la machine ne tourne pas, les doubles enroulements statoriques d'un stator font fonction de transformateur comme dans un convertisseur continu-continu conventionnel.

Mais les enroulements statoriques de ce type de machine ont une inductance très faible comparée à celle que l'on trouve dans un convertisseur continu- continu adapté, et les pertes fer dans la machine sont beaucoup plus élevées.

Cela a pour résultat que le rendement de la conversion est assez faible comparé à celui d'un convertisseur adapté, ce qui représente un inconvénient alors que par ailleurs l'architecture bi-tension est simplifiée.

### DESCRIPTION GENERALE DE L'INVENTION.

La présente invention vise donc à pallier cet inconvénient.

La machine électrique tournante double tension polyphasée réversible de véhicule automobile dont il s'agit est du type de celles comprenant:
- un rotor apte à être couplé mécaniquement à un moteur thermique du véhicule automobile;
- un stator comportant des premiers enroulements statoriques en étoile connectés à un premier onduleur réversible apte à être relié par une première borne de sortie à un premier sous-réseau d'un réseau électrique d'alimentation des équipements du véhicule automobile à une première tension continue nominale prédéterminée par rapport à un potentiel de référence d'une borne de masse, et des seconds enroulements statoriques en étoile connectés à un second onduleur réversible apte à être relié par une seconde borne de sortie à un second sous-réseau de ce réseau électrique d'alimentation à une seconde tension continue nominale prédéterminée par rapport au potentiel de référence inférieure à la première tension continue nominale prédéterminée;
- un circuit de transfert comprenant au moins un interrupteur et reliant électriquement un point neutre des premiers enroulements statoriques à la seconde borne de sortie.

Selon l'invention, ce circuit de transfert comprend en outre une self de réduction de pertes fer du stator agencée en série avec cet interrupteur.

Dans la machine électrique tournante double tension polyphasée réversible de véhicule automobile selon l'invention, cette self est constituée d'une ferrite entourant au moins en partie une trace de puissance formant par une première extrémité des interconnections constituant le point neutre des premiers enroulements statoriques et étant reliée par une seconde extrémité à l'interrupteur du circuit de transfert.

Dans un premier mode de réalisation de l'invention, cette ferrite entoure au moins en partie une portion centrale de la trace de puissance formée dans un connecteur circulaire s'étendant dans un plan transversal du stator.

Selon l'invention, la ferrite est formée entre la trace de puissance et une matière plastique surmoulée constituant le connecteur.

Dans un second mode de réalisation de l'invention, la ferrite entoure au moins en partie la seconde extrémité de la trace de puissance s'étendant dans une direction axiale du stator.

Selon l'invention, les premier et second onduleurs sont agencés sur un palier arrière de la machine, la trace de puissance reliant le point neutre des premiers enroulements statoriques au second onduleur.

Dans les premier et second modes de réalisation de l'invention, les premier et second enroulements statoriques sont de préférence triphasés.

L'invention concerne également un réseau électrique d'alimentation des équipements d'un véhicule automobile à double sous-réseaux du type de ceux comportant:
- un premier sous-réseau électrique à une première tension continue nominale prédéterminée par rapport à un potentiel de référence comprenant un premier stockeur d'énergie électrique;
- un second sous-réseau électrique à une seconde tension continue nominale prédéterminée par rapport audit potentiel de référence comprenant un second stockeur d'énergie électrique.

Selon l'invention, les premier et second sous-réseaux sont connectés respectivement à des première et seconde bornes de sortie d'une machine électrique tournante double tension polyphasée réversible présentant les caractéristiques ci-dessus, qui est reliée par une borne de masse au potentiel de référence, et qui est apte à être couplée mécaniquement à un moteur thermique du véhicule.

Un transfert d'énergie électrique entre ledit premier stockeur d'énergie électrique et ledit second stockeur d'énergie électrique est réalisé selon l'invention au moyen de la machine électrique tournante à l'arrêt du moteur thermique avec un rendement compris entre 70% et 84% quand les première et seconde tensions nominales sont respectivement de sensiblement 48 V et 12 V, et une puissance reçue sur le second sous-réseau est comprise entre 400 W et 2 kW.

Ces quelques spécifications essentielles de l'invention auront rendu évidents pour l'homme de métier les avantages de la machine électrique tournante double tension polyphasée réversible de véhicule automobile selon l'invention par rapport à l'état de la technique.

Les spécifications détaillées de l'invention sont données dans la description qui suit en liaison avec les dessins ci-annexés. II est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** est un schéma de principe d'un réseau électrique d'alimentation des équipements d'un véhicule automobile à double sous-réseaux connu de l'état de la technique, mettant en oeuvre un convertisseur continu- continu dédié.
La **Figure 2** est un schéma de principe d'un autre réseau électrique d'alimentation des équipements d'un véhicule automobile à double sous-réseaux connu de l'état de la technique, mettant en oeuvre une machine électrique tournante double tension polyphasée. du type concerné par l'invention.
La **Figure 3** est un schéma de principe détaillé d'une machine électrique tournante double tension polyphasée réversible connue de l'état de la technique.
La **Figure 4** est un schéma de principe détaillé d'une machine électrique tournante double tension polyphasée réversible selon l'invention.
Les **Figures 5a et 5b****,** illustrent respectivement les pertes et le rendement d'une machine électrique tournante double tension polyphasée réversible connue de l'état de la technique (traits tiretés), et d'une machine de même type selon l'invention en mode de conversion continu-continu à vitesse nulle (traits pleins).
La **Figure 6** est une vue d'un palier arrière d'une machine électrique tournante double tension polyphasée réversible selon l'invention.

### DESCRIPTION DES MODES DE REALISATION PREFERES DE L'INVENTION.

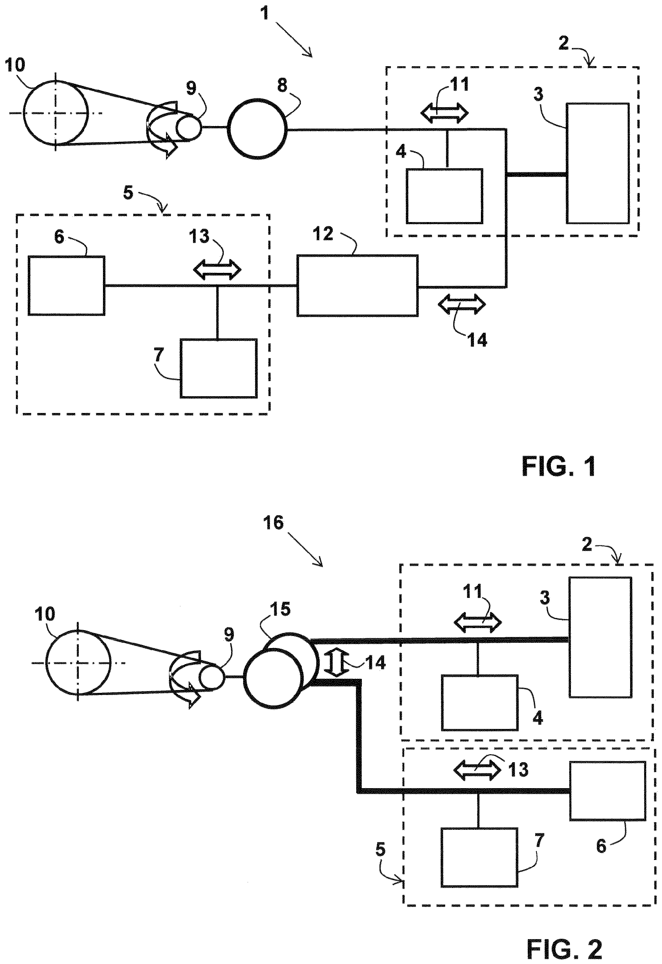

Le réseau électrique 1 d'alimentation des équipements d'un véhicule automobile à double sous-réseaux connu de l'état de la technique, montré sur la **Figure 1****,** comporte:
- un premier sous-réseau électrique 2 fonctionnant sous une première tension continue nominale V1 de 48 V et relié à un stockeur d'énergie électrique 3, alimentant des premières charges 4 sous cette première tension V1 ;
- un second sous-réseau électrique 5 fonctionnant sous une seconde tension continue nominale V2 de 12 V et relié à une batterie 6 de type acide- plomb, alimentant des secondes charges électriques 7.

Une machine électrique tournante polyphasée réversible 8 est couplée mécaniquement 9 à un moteur thermique du véhicule 10 pour fournir de l'énergie électrique 11 au premier sous-réseau 2.

Un convertisseur continu- continu réversible 12 est connecté entre les premier et second sous-réseaux 2, 5 pour fournir de l'énergie électrique 13 aux secondes charges électriques 7 conventionnelles sous 12 V, et de manière générale assurer les transferts d'énergie 14 entre les deux sous-réseaux 2, 5.

Comme indiqué en préambule, pour simplifier l'architecture du véhicule, il est connu d'alimenter les deux sous-réseaux 2, 5 par une machine électrique tournante double tension polyphasée réversible 15 dans une configuration d'un autre réseau 16 montré sur **Figure 2****.**

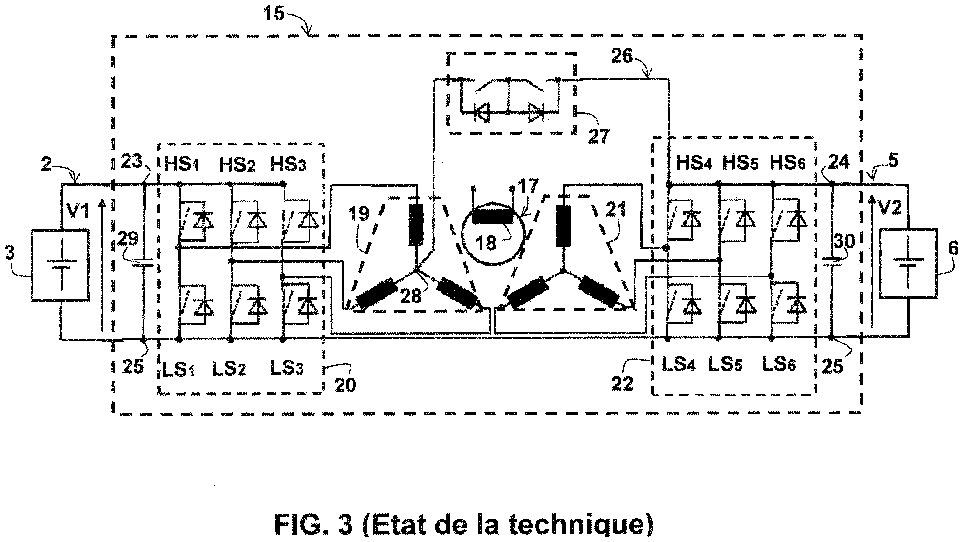

Une structure d'une machine double tension double triphasée 15 connue de l'état de la technique est montrée en détail sur la **Figure 3****.**

Cette machine 15 comprend:
- un rotor 17 apte à être couplé mécaniquement au moteur thermique 10 du véhicule et comportant une bobine d'induction 18;
- un stator comportant des premiers enroulements statoriques 19 en étoile (deux tours par pôle) connectés à un premier onduleur réversible 20 et des seconds enroulements statoriques 21 en étoile (un demi tour par pôle) connectés à un second onduleur réversible 22.

Les premier et second onduleurs réversibles 20, 22 sont formés de ponts triphasés dont les bras comportent des commutateurs à semi-conducteur de puissance pilotables reliant, d'une part, les premiers et seconds enroulements statoriques 19, 21 respectivement à des première et seconde bornes de sortie 23, 24 aptes à être connectées aux premier et second sous-réseaux 2, 5 (commutateurs à semi-conducteur supérieurs HS₁, HS₂, HS₃, HS₄, HS₅, HS₆ du côté dit "high-side"), et, d'autre part, à une borne de masse 25 (commutateurs à semi-conducteur inférieurs LS₁, LS₂, LS₃, LS₄, LS₅, LS₆, du côté dit "low-side").

Dans cette architecture 16, on dispose d'une commande de la machine 15 adaptée (gestion du couple par des commande MLI des onduleurs 20, 22) pour réaliser toutes les fonctions d'une machine électrique hybride (mode démarrage, mode moteur, mode générateur) basées sur l'énergie fournie à, ou fournie par les premier et second sous-réseaux 2, 5 (48 V ou 12 V).

Une fonction équivalente à celle du convertisseur continu- continu 12 (fournir de l'énergie 13 aux charges 12 V) du réseau conventionnel 1 avec un convertisseur continu- continu 12 additionnel est réalisée quand la machine 15 est en mode générateur et en rotation.

Pour assurer cette fonction de convertisseur continu- continu même quand la machine électrique 15 ne tourne pas (moteur thermique à l'arrêt), un circuit de transfert 26 comprenant un interrupteur 27 (bidirectionnel, comme le montre la **Figure 3****,** pour une réalisation avec des interrupteurs à semi-conducteur) est agencé entre un point neutre 28 des premiers enroulements statoriques 19 et la seconde borne de sortie 24 vers le second sous-réseau 5 (12 V).

Quand la machine 15 est arrêtée, cet interrupteur 27 est fermé et les premiers enroulements statoriques 19 alimentés sous 48 V sont utilisés comme des inducteurs d'un convertisseur continu- continu (équivalents au primaire d'un transformateur de rapport 1/4) de manière à permettre l'échange d'énergie d'un réseau à l'autre 2, 5 comme avec un convertisseur continu- continu conventionnel 12.

Les commutateurs de puissance du premier onduleur 20 relié au premier sous-réseau (48 V) sont commandés en MLI, à une fréquence de 10 à 20 kHz, par exemple, pour réguler le courant dans chacun des premiers enroulements statoriques 19, et un filtrage est assuré par les condensateurs 29, 30 déjà présents dans la machine 15 pour le fonctionnement en mode moteur ou en mode générateur.

Ainsi que cela a déjà été remarqué en préambule, les premiers enroulements statoriques 19 de la machine 15 présentent une inductance très faible comparée à celle qui peut être trouvée dans un convertisseur continu- continu 12 dédié. De ce fait des pertes fer Ps dans une carcasse 31 du stator sont beaucoup plus élevées.

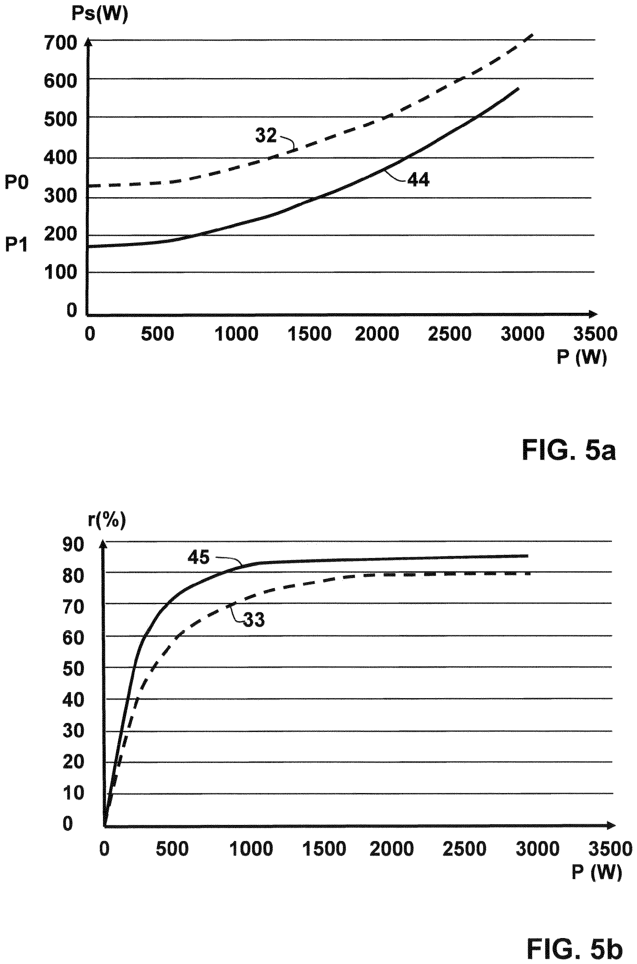

La **Figure 5a** montre les pertes de conversion Ps (trait tireté 32) en fonction de la puissance fournie P au second sous- réseau (12 V) de la machine 15 connue de l'état de la technique, à température ambiante, en mode abaisseur de tension de 48,5 V à 13,7 V (utilisation typique dans une automobile) en utilisant une commande MLI à 20 kHz.

On voit que les pertes de conversion Ps sont très importantes, plus de 300 W pour une puissance fournie P nulle.

Les pertes PO à puissance nulle sont principalement les pertes fer, puisqu'il n'y a pas de courant significatif à faible charge, c'est-à-dire pas de pertes par effet Joule, ou de pertes cuivre, significatives.

Par voie de conséquence, un rendement r du transfert d'énergie dans ce mode de fonctionnement est assez faible comparé à celui d'un convertisseur continu- continu adapté 12.

Comme le montre la **Figure 5b****,** le rendement de la machine 15 connue de l'état de la technique (trait tireté 33) est d'environ 85% au maximum, et significativement plus faible à faible charge (50 - 60%).

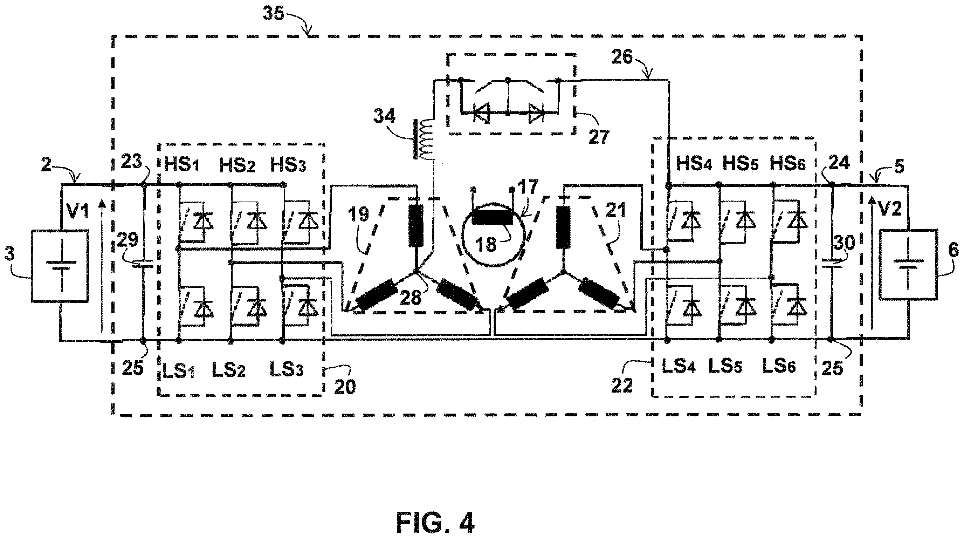

Afin de réduire les pertes fer PO d'une machine de ce type 15 et en améliorer le rendement, l'entité inventive a ajouté une self 34 en série avec l'interrupteur 27 dans le circuit de transfert 26 comme le montre bien la **Figure 4****,** entre le point neutre 28 des premiers enroulements statoriques 19 et la seconde borne de sortie 24 vers le second sous-réseau 5.

Dans la machine électrique tournante double tension double triphasée réversible 35 selon l'invention, un choix correct de l'inductance de la self 34 permet de réduire significativement (diviser par deux) les pertes fer P0.

Un problème important que l'entité inventive a dû résoudre est celui de l'intégration de la self 34 dans la machine 35.

Cette self doit être capable de supporter 300 A dans le pire des cas, et l'ordre de grandeur de son inductance doit être de 0,5 µH à 2 µH afin d'avoir un effet significatif sur les pertes fer PO.

Cette self 34 peut présenter un volume important qui la rend difficilement intégrable sans un impact sur le volume extérieur de la machine 35.

Par exemple, une self 34 du commerce, qui possède les caractéristiques électriques appropriées (Rmax = 0,1 mΩ, Imax = 240 A, Tmax = 150°C, L= 0,4 µH) présente un volume non négligeable (environ 25 mm x 22 mm x 35 mm).

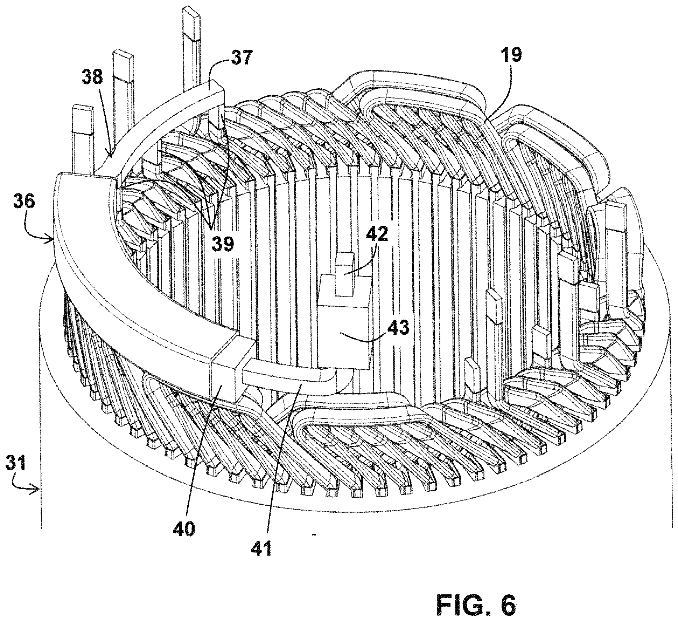

Dans la machine 35 selon l'invention, l'intégration de la self 34 de réduction des pertes fer PO est réalisée au moyens d'une pièce mécatronique 36 développée spécifiquement que montre bien la **Figure 6****.**

Cette pièce 36 est un connecteur qui s'étend en arc de cercle dans un plan transversal de la carcasse 31 du stator.

Une première extrémité 37 d'une trace de puissance 38 en cuivre surmoulée dans une matière plastique du connecteur 36 réalise les interconnections des premiers enroulements statoriques 19 pour constituer le point neutre 28.

Dans un premier mode de réalisation préféré de l'invention, montré sur la **Figure 6****,** la self 34 est constituée d'une ferrite 40 entourant au moins en partie une portion centrale 41 de la trace de puissance 38 à l'intérieur du plastique surmoulé.

Le connecteur 36 permet également de relier le point neutre 28 à l'interrupteur 27 et au second onduleur 22 (non représentés) intégrés sur le palier arrière de la machine 35 par une seconde extrémité 42 de la trace de puissance 38.

Dans un second mode de réalisation préféré de l'invention, que montre bien également la **Figure 6****,** la self 34 est constituée d'une autre ferrite 43 entourant au moins en partie la seconde extrémité 42 de la trace de puissance 38.

Ces premier ou second modes de réalisation, qui peuvent être combinés, permettent une intégration de la self 34 sans aucune augmentation de volume de la machine 35.

Les **Figures 5a et 5b** montrent les améliorations apportées par une self 34 ayant une inductance d'environ 1 µH en termes de réduction des pertes de conversion Ps et de rendement r.

La **Figure 5a** montre bien que les pertes de conversion Ps en fonction de la puissance P fournie au second sous-réseau (12 V) pour la machine 35 selon l'invention (trait plein 44) sont significativement plus faibles que celles (trait tireté) de la machine 15 connue de l'état de la technique. Les pertes fer P1 (à puissance transférée nulle) sont de 170 W au lieu de 320 W.

De même, la **Figure 5b** montre bien l'amélioration du rendement r de la machine 35 selon l'invention (trait plein 45). Par rapport à la machine 15 connue de l'état de la technique, on observe par exemple un rendement r de:
- 70% au lieu de 56% pour une puissance P de 400 W;
- 84% au lieu de 79% pour une puissance P de 2 kW.

Comme il va de soi, l'invention ne se limite pas aux seuls modes d'exécution préférentiels décrits ci-dessus.

Les valeurs numériques indiquées ne sont que des exemples destinés à faire la démonstration de l'avantage apporté par l'insertion d'une self 34 dans le circuit de transfert 26 d'une machine double tension double triphasée 15 connue de l'état de la technique.

Une description similaire pourrait s'appliquer à des machines 35 de même type possédant un plus grand nombre de phases, et alimentant des réseaux électriques 16 de véhicules automobiles à double sous-réseaux 2, 5 à des tensions continues nominales V1, V2 différentes de celles citées.

L'invention embrasse donc toutes les variantes possibles de réalisation dans la limite de l'objet des revendications ci-après.

## Revendications

1. Machine électrique tournante double tension polyphasée réversible (15, 35) de véhicule automobile du type de celles comprenant un rotor (17) apte à être couplé mécaniquement (9) à un moteur thermique (10) dudit véhicule automobile, un stator (19, 21, 31) comportant des premiers enroulements statoriques (19) en étoile connectés à un premier onduleur réversible (20) apte à être relié par une première borne de sortie (23) à un premier sous-réseau (2) d'un réseau électrique (16) d'alimentation des équipements (3) dudit véhicule automobile à une première tension continue nominale (V1) prédéterminée par rapport à un potentiel de référence d'une borne de masse (25), et des seconds enroulements statoriques (21) en étoile connectés à un second onduleur réversible (22) apte à être relié par une seconde borne de sortie (24) à un second sous-réseau (5) dudit réseau électrique (16) d'alimentation à une seconde tension continue nominale (V2) prédéterminée par rapport audit potentiel de référence inférieure à ladite première tension continue nominale (V1) prédéterminée, un circuit de transfert (26) comprenant au moins un interrupteur (27) et reliant électriquement un point neutre (28) desdits premiers enroulements statoriques (19) à ladite seconde borne de sortie (24), **caractérisée en ce que** ledit circuit de transfert (26) comprend en outre une self (34) de réduction de pertes fer dudit stator (19, 21, 31) agencée en série avec ledit interrupteur (27), ladite self étant constituée d'une ferrite entourant au moins en partie une trace de puissance formant par une première extrémité des interconnections constituant le point neutre des premiers enroulements statoriques et étant reliée par une seconde extrémité à l'interrupteur du circuit de transfert (26).

2. Machine électrique tournante double tension polyphasée réversible (35) de véhicule automobile selon la revendication 1 précédente, **caractérisée en ce que** ladite self (34) présente une inductance comprise entre 0,5 µH et 2 µH .

3. Machine électrique tournante double tension polyphasée réversible (35) de véhicule automobile selon la revendication 1 précédente, **caractérisée en ce que** ladite self (34) est constituée d'une ferrite (40, 43) entourant au moins en partie une trace de puissance (38) formant par une première extrémité (37) des interconnections (39) constituant ledit point neutre (28) et étant reliée par une seconde extrémité (42) audit interrupteur (27).

4. Machine électrique tournante double tension polyphasée réversible (35) de véhicule automobile selon la revendication 3 précédente, **caractérisée en ce que** ladite ferrite (40) entoure au moins en partie une portion centrale (41) de ladite trace de puissance (38) formée dans un connecteur (36) circulaire s'étendant dans un plan transversal dudit stator (19, 21, 31).

5. Machine électrique tournante double tension polyphasée réversible (35) de véhicule automobile selon la revendication 4 précédente, **caractérisée en ce que** ladite ferrite (40) est formée entre ladite trace de puissance (38) et une matière plastique surmoulée constituant ledit connecteur (36).

6. Machine électrique tournante double tension polyphasée réversible (35) de véhicule automobile selon la revendication 3 précédente, **caractérisée en ce que** ladite ferrite (43) entoure au moins en partie ladite seconde extrémité (42) s'étendant dans une direction axiale dudit stator (19, 21, 31).

7. Machine électrique tournante double tension polyphasée réversible (35) de véhicule automobile selon l'une quelconque des revendications 3 à 6 précédentes, **caractérisée en ce que** lesdits premier et second onduleurs (20, 22) sont agencés sur un palier arrière de ladite machine (35), ladite trace de puissance (38) reliant ledit point neutre (28) audit second onduleur (22).

8. Machine électrique tournante double tension polyphasée réversible (35) de véhicule automobile selon l'une quelconque des revendications 1 à 7 précédentes, **caractérisée en ce que** lesdits premier et second enroulements statoriques (19, 21) sont triphasés.

9. Réseau électrique (16) d'alimentation des équipements (3, 6) d'un véhicule automobile à double sous-réseaux (2; 5) du type de ceux comportant un premier sous-réseau électrique (2) à une première tension continue nominale (V1) prédéterminée par rapport à un potentiel de référence comprenant un premier stockeur d'énergie électrique (3), et un second sous-réseau (5) électrique à une seconde tension continue nominale (V2) prédéterminée par rapport audit potentiel de référence comprenant un second stockeur d'énergie électrique (6), **caractérisé en ce que** lesdits premier et second sous-réseaux (2, 5) sont connectés respectivement à des première et seconde bornes de sortie (23, 24) d'une machine électrique tournante double tension polyphasée réversible (35) selon l'une quelconque des revendication 1 à 8 précédentes reliée par une borne de masse (25) audit potentiel de référence, et apte à être couplée mécaniquement (9) à un moteur thermique (10) dudit véhicule.

10. Réseau électrique (16) d'alimentation des équipements d'un véhicule automobile à double sous-réseaux (2, 5) selon la revendication 9 précédente, **caractérisé en ce qu'**un transfert d'énergie électrique (14) entre ledit premier stockeur d'énergie électrique (3) et ledit second stockeur d'énergie électrique (6) est réalisé au moyen de ladite machine électrique tournante (35) à l'arrêt dudit moteur thermique (10) avec un rendement compris entre 70% et 84% quand lesdites première et seconde tensions nominales (V1, V2) sont respectivement de sensiblement 48 V et 12 V, et une puissance (P) reçue sur ledit second sous-réseau (5) est comprise entre 400 W et 2 kW.

## Patentansprüche

1. Rotierende elektrische Maschine mit reversibler mehrphasiger Doppelspannung (15, 35) eines Kraftfahrzeugs, vom Typ derjenigen, welche umfassen: einen Rotor (17), der geeignet ist, mechanisch (9) mit einem Verbrennungsmotor (10) des Kraftfahrzeugs gekoppelt zu werden, einen Stator (19, 21, 31), der erste Statorwicklungen (19) in Sternschaltung aufweist, die mit einem ersten reversiblen Wechselrichter (20) verbunden sind, der über eine erste Ausgangsklemme (23) mit einem ersten Teilnetz (2) eines Stromnetzes (16) zur Versorgung der Einrichtungen (3) des Kraftfahrzeugs mit einer vorbestimmten ersten Nenngleichspannung (V1) bezüglich eines Bezugspotentials einer Masseklemme (25) verbunden werden kann, und zweite Statorwicklungen (21) in Sternschaltung, die mit einem zweiten reversiblen Wechselrichter (22) verbunden sind, der über eine zweite Ausgangsklemme (24) mit einem zweiten Teilnetz (5) des Stromnetzes (16) zur Versorgung mit einer vorbestimmten zweiten Nenngleichspannung (V2) bezüglich des Bezugspotentials, die niedriger als die vorbestimmte erste Nenngleichspannung (V1) ist, verbunden werden kann, wobei eine Übertragungsschaltung (26) wenigstens einen Schalter (27) aufweist und einen Sternpunkt (28) der ersten Statorwicklungen (19) mit der zweiten Ausgangsklemme (24) elektrisch verbindet, **dadurch gekennzeichnet, dass** die Übertragungsschaltung (26) außerdem eine Drossel (34) zur Verringerung der Eisenverluste des Stators (19, 21, 31) umfasst, die mit dem Schalter (27) in Reihe geschaltet ist, wobei diese Drossel aus einem Ferrit besteht, der wenigstens teilweise eine Strombahn umgibt, die über ein erstes Ende Verbindungen bildet, die den Sternpunkt der ersten Statorwicklungen bilden, und über ein zweites Ende mit dem Schalter der Übertragungsschaltung (26) verbunden ist.

2. Rotierende elektrische Maschine mit reversibler mehrphasiger Doppelspannung (35) eines Kraftfahrzeugs nach dem vorhergehenden Anspruch 1, **dadurch gekennzeichnet, dass** die Drossel (34) eine Induktivität zwischen 0,5 µH und 2 µH aufweist.

3. Rotierende elektrische Maschine mit reversibler mehrphasiger Doppelspannung (35) eines Kraftfahrzeugs nach dem vorhergehenden Anspruch 1, **dadurch gekennzeichnet, dass** die Drossel (34) aus einem Ferrit (40, 43) besteht, der wenigstens teilweise eine Strombahn (38) umgibt, die über ein erstes Ende (37) Verbindungen (39) bildet, die den Sternpunkt (28) bilden, und über ein zweites Ende (42) mit dem Schalter (27) verbunden ist.

4. Rotierende elektrische Maschine mit reversibler mehrphasiger Doppelspannung (35) eines Kraftfahrzeugs nach dem vorheregehenden Anspruch 3, **dadurch gekennzeichnet, dass** der Ferrit (40) wenigstens teilweise einen mittleren Abschnitt (41) der Strombahn (38) umgibt, der in einem kreisförmigen Verbinder (36) ausgebildet ist, der sich in einer Querebene des Stators (19, 21, 31) erstreckt.

5. Rotierende elektrische Maschine mit reversibler mehrphasiger Doppelspannung (35) eines Kraftfahrzeugs nach dem vorhergehenden Anspruch 4, **dadurch gekennzeichnet, dass** der Ferrit (40) zwischen der Strombahn (38) und einem Kunststoff, mit dem er umspritzt ist und der den Verbinder (36) bildet, ausgebildet ist.

6. Rotierende elektrische Maschine mit reversibler mehrphasiger Doppelspannung (35) eines Kraftfahrzeugs nach dem vorhergehenden Anspruch 3, **dadurch gekennzeichnet, dass** der Ferrit (43) wenigstens teilweise das zweite Ende (42) umgibt, das sich in einer axialen Richtung des Stators (19, 21, 31) erstreckt.

7. Rotierende elektrische Maschine mit reversibler mehrphasiger Doppelspannung (35) eines Kraftfahrzeugs nach einem der vorhergehenden Ansprüche 3 bis 6, **dadurch gekennzeichnet, dass** der erste und der zweite Wechselrichter (20, 22) auf einem hinteren Lager der Maschine (35) angeordnet sind, wobei die Strombahn (38) den Sternpunkt (28) mit dem zweiten Wechselrichter (22) verbindet.

8. Rotierende elektrische Maschine mit reversibler mehrphasiger Doppelspannung (35) eines Kraftfahrzeugs nach einem der vorhergehenden Ansprüche 1 bis 7, **dadurch gekennzeichnet, dass** die ersten und zweiten Statorwicklungen (19, 21) dreiphasig sind.

9. Stromnetz (16) zur Versorgung der Einrichtungen (3, 6) eines Kraftfahrzeugs mit zwei Teilnetzen (2; 5), vom Typ derjenigen, welche ein erstes Teilstromnetz (2) mit einer vorbestimmten ersten Nenngleichspannung (V1) bezüglich eines Bezugspotentials, das einen ersten elektrischen Energiespeicher (3) umfasst, und ein zweites Teilstromnetz (5) mit einer vorbestimmten zweiten Nenngleichspannung (V2) bezüglich des Bezugspotentials, das einen zweiten elektrischen Energiespeicher (6) umfasst, aufweisen, **dadurch gekennzeichnet, dass** das erste und das zweite Teilnetz (2, 5) mit einer ersten bzw. zweiten Ausgangsklemme (23, 24) einer rotierenden elektrischen Maschine mit reversibler mehrphasiger Doppelspannung (35) nach einem der vorhergehenden Ansprüche 1 bis 8 verbunden sind, die über eine Masseklemme (25) mit dem Bezugspotential verbunden ist und geeignet ist, mechanisch (9) mit einem Verbrennungsmotor (10) des Kraftfahrzeugs gekoppelt zu werden.

10. Stromnetz (16) zur Versorgung der Einrichtungen eines Kraftfahrzeugs mit zwei Teilnetzen (2, 5) nach dem vorhergehenden Anspruch 9, **dadurch gekennzeichnet, dass** eine Übertragung von elektrischer Energie (14) zwischen dem ersten elektrischen Energiespeicher (3) und dem zweiten elektrischen Energiespeicher (6) mittels der rotierenden elektrischen Maschine (35) bei abgestelltem Verbrennungsmotor (10) mit einem Wirkungsgrad zwischen 70 % und 84 % durchgeführt wird, wenn die erste und die zweite Nennspannung (V1, V2) im Wesentlichen 48 V bzw. 12 V betragen und eine an dem zweiten Teilnetz (5) empfangene Leistung (P) zwischen 400 W und 2 kW beträgt.

## Claims

1. Reversible polyphase dual-voltage rotating electrical machine (15, 35) for a motor vehicle, of the type comprising a rotor (17) able to be coupled mechanically (9) to a thermal combustion engine (10) of said motor vehicle, a stator (19, 21, 31) including first stator windings (19) in a star configuration that are connected to a first reversible inverter (20) that is able to be linked, by a first output terminal (23), to a first subnetwork (2) of an electrical network (16) for supplying equipment (3) of said motor vehicle at a first nominal DC voltage (V1) that is predetermined with respect to a reference potential of a ground terminal (25), and second stator windings (21) in a star configuration that are connected to a second reversible inverter (22) that is able to be linked, by a second output terminal (24), to a second subnetwork (5) of said electrical supply network (16) at a second nominal DC voltage (V2) that is predetermined with respect to said reference potential and lower than said first predetermined nominal DC voltage (V1), a transfer circuit (26) comprising at least one switch (27) and electrically linking a neutral point (28) of said first stator windings (19) to said second output terminal (24), **characterized in that** said transfer circuit (26) furthermore comprises an inductor (34) for reducing iron losses of said stator (19, 21, 31), arranged in series with said switch (27), said inductor being formed of a ferrite at least partly surrounding a power trace forming, through a first end, interconnections forming the neutral point of the first stator windings and being linked, by a second end, to the switch of the transfer circuit (26).

2. Reversible polyphase dual-voltage rotating electrical machine (35) for a motor vehicle according to preceding Claim 1, **characterized in that** said inductor (34) has an inductance of between 0.5 µH and 2 µH.

3. Reversible polyphase dual-voltage rotating electrical machine (35) for a motor vehicle according to preceding Claim 1, **characterized in that** said inductor (34) is formed of a ferrite (40, 43) at least partly surrounding a power trace (38) forming, through a first end (37), interconnections (39) forming said neutral point (28) and being linked, by a second end (42), to said switch (27).

4. Reversible polyphase dual-voltage rotating electrical machine (35) for a motor vehicle according to preceding Claim 3, **characterized in that** said ferrite (40) at least partly surrounds a central portion (41) of said power trace (38) formed in a circular connector (36) extending in a transverse plane of said stator (19, 21, 31).

5. Reversible polyphase dual-voltage rotating electrical machine (35) for a motor vehicle according to preceding Claim 4, **characterized in that** said ferrite (40) is formed between said power trace (38) and an overmoulded plastic material forming said connector (36).

6. Reversible polyphase dual-voltage rotating electrical machine (35) for a motor vehicle according to preceding Claim 3, **characterized in that** said ferrite (43) at least partly surrounds said second end (42) extending in an axial direction of said stator (19, 21, 31).

7. Reversible polyphase dual-voltage rotating electrical machine (35) for a motor vehicle according to any one of preceding Claims 3 to 6, **characterized in that** said first and second inverters (20, 22) are arranged on a rear bearing of said machine (35), said power trace (38) linking said neutral point (28) to said second inverter (22).

8. Reversible polyphase dual-voltage rotating electrical machine (35) for a motor vehicle according to any one of preceding Claims 1 to 7, **characterized in that** said first and second stator windings (19, 21) are three-phase.

9. Electrical network (16) for supplying equipment (3, 6) of a motor vehicle having dual subnetworks (2; 5), of the type including a first electrical subnetwork (2) at a first nominal DC voltage (V1) that is predetermined with respect to a reference potential, comprising a first electrical energy store (3), and a second electrical subnetwork (5) at a second nominal DC voltage (V2) that is predetermined with respect to said reference potential, comprising a second electrical energy store (6), **characterized in that** said first and second subnetworks (2, 5) are connected to first and second output terminals (23, 24), respectively, of a reversible polyphase dual-voltage rotating electrical machine (35) according to any one of preceding Claims 1 to 8 that is linked, by a ground terminal (25), to said reference potential, and able to be coupled mechanically (9) to a thermal combustion engine (10) of said vehicle.

10. Electrical network (16) for supplying equipment of a motor vehicle having dual subnetworks (2, 5) according to preceding Claim 9, **characterized in that** a transfer of electrical energy (14) between said first electrical energy store (3) and said second electrical energy store (6) is made by way of said rotating electrical machine (35) upon stoppage of said thermal combustion engine (10) with an efficiency of between 70% and 84% when said first and second nominal voltages (V1, V2) are substantially 48 V and 12 V, respectively, and a power (P) received on said second subnetwork (5) is between 400 W and 2 kW.
